(19) Europäisches Patentamt
European Patent Office
Office européen des brevets

(11) Veröffentlichungsnummer: **0 094 718**
**A1**

# (12) EUROPÄISCHE PATENTANMELDUNG

(21) Anmeldenummer: 83200664.7

(22) Anmeldetag: 09.05.83

(51) Int. Cl.³: C 01 B 11/02
B 01 J 14/00, B 01 J 19/24

(30) Priorität: 15.05.82 DE 3218475

(43) Veröffentlichungstag der Anmeldung:
23.11.83 Patentblatt 83/47

(84) Benannte Vertragsstaaten:
AT BE CH DE FR GB IT LI SE

(71) Anmelder: METALLGESELLSCHAFT AG
Reuterweg 14 Postfach 3724
D-6000 Frankfurt/M.1(DE)

(72) Erfinder: Lohrberg, Karl, Dipl.-Ing.
Breslauer Strasse 1
D-6056 Heusenstamm(DE)

(72) Erfinder: Andres, Peter
Waldhofstrasse 49
D-6050 Offenbach am Main(DE)

(74) Vertreter: Fischer, Ernst, Dr.
Reuterweg 14
D-6000 Frankfurt am Main 1(DE)

## (54) Reaktor für die Herstellung von Chlordioxid.

(57) Die Herstellung von Chlordioxid erfolgt in zunehmendem Maße aus Natrium-Chlorat und Chlorwasserstoffsäure unter Verwendung eines Spülgas-Gegenstromes, in einem Reaktor mit mehreren übereinander angeordneten und mit Öffnungen versehenen, die Rückvermischung von Gas und Flüssigkeit hindernden Einbauten.

Um eine Vermischung der gesamten Reaktionslösung zu hemmen und eine höhere Effektivität der Reaktion zwischen den beiden Ausgangskomponenten zu schaffen, werden die Einbauten als in horizontalen Ebenen angeordnete, profilierte Trennboden-Bleche (2) gestaltet, wobei deren Erhebungen und Vertiefungen Durchtrittsöffnungen (3, 4) aufweisen. Auf diese Weise können beliebig viele Reaktionsräume entstehen.

Zweckmäßig bestehen die Einbauten aus zickzack- oder wellenförmig profilierten Blechen. Die Trennböden können auf die Scheitellinien bezogen alternierend um 90°C gegeneinander verdreht, ferner in voneinander unterschiedlichen Abständen angeordnet sein.

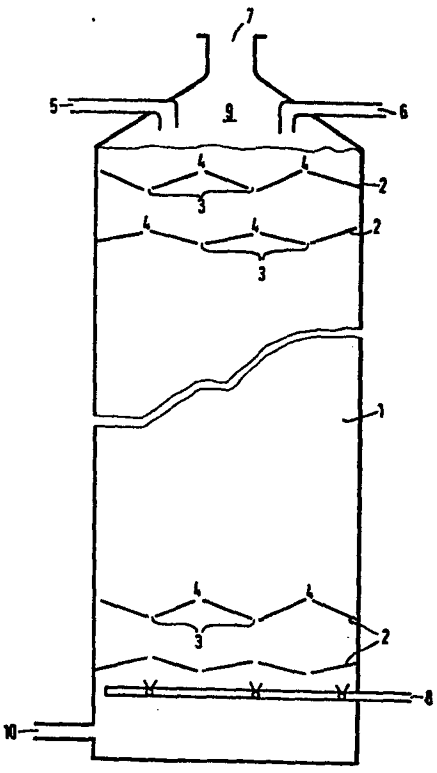


Fig.2

EP 0 094 718 A1

Croydon Printing Company Ltd.

0094718

METALLGESELLSCHAFT
Aktiengesellschaft
6000 Frankfurt/Main
Reuterweg 14

14. Mai 1982
DRML/0694/HFA

Prov. Nr. 8869 LC

# Reaktor für die Herstellung von Chlordioxid

Die Erfindung betrifft einen Reaktor zur Herstellung von Chlordioxid.

Reaktionen zwischen Gasen und Flüssigkeiten werden in den meisten Fällen im Gegenstrom geführt. Bei relativ großen Flüssigkeitsmengen und großen Gasmengen wendet man mit Füllkörpern beschickte Türme an, die im Gegenstrom zum Gas mit der Flüssigkeit berieselt werden. Bei kleinen Flüssigkeitsmengen im Verhältnis zum Gas wendet man Glockenböden oder ähnliche Einbauten an. Schwieriger wird die Optimierung solcher Apparate, wenn das Gas aus in der Flüssigkeit enthaltenen Komponenten gebildet wird. In solchen Fällen muß die Bildungsgeschwindigkeit des Gases bei der apparativen Auslegung des Reaktors berücksichtigt werden. Neben dem Volumen-Verhältnis Gas-Flüssigkeit ist dann die Reaktionsgeschwindigkeit einer chemischen Umsetzung die zur Gasentwicklung führt, zu berücksichtigen. Muß die Reaktion trotzdem im Gegenstrom zum Gas geführt werden, hat man bereits in bekannter Weise Kaskaden aus mehreren Reaktionsbehältern angewendet, die entweder seitlich versetzt oder senkrecht übereinander angeordnet worden sind (DE-PS 924 689). Bei einer Anordnung senkrecht übereinander sind die einzelnen Behälter oder Reaktionskammern durch z B. abgetauchte Flüssigkeitsüberläufe und durch Gastauchungen, die im Prinzip einer großen Glocke eines Glockenbodens entsprechen, miteinander verbunden worden (DE-OS 31 18 795).

0094718

Ein typisches Beispiel einer solchen, Gas durch chemische Umsetzung bildenden Reaktion ist die Erzeugung von Chlordioxid durch Einwirkung von Chlorwasserstoffsäure auf Natriumchlorat, wobei ein Spül- oder Verdünnungsgas im Gegenstrom geführt wird.

Bei diesem Prozeß laufen folgende Vorgänge ab:

1) Bildung von $ClO_2$.
   Hierbei sind 2 Reaktionen möglich, die auch in der praktischen Durchführung ablaufen, wobei die Reaktion 1.2 möglichst unterdrückt werden sollte.

   1.1 $NaClO_3 + 2\ HCl \rightarrow ClO_2 + 1/2\ Cl_2 + NaCl + H_2O$

   1.2 $NaClO_3 + 6\ HCl \rightarrow 3\ Cl_2 + NaCl + 3H_2O$

   Bei der Erzeugung von $ClO_2$ nach diesem Verfahren sind folgende Bedingungen zu berücksichtigen:

   a) Das Verhältnis $NaClO_3$ zu HCl muß groß sein, um die Reaktion 1.1 zu favorisieren.

   b) Die Konzentration von HCl muß möglichst hoch sein, um die Bildung von $ClO_2$ zu beschleunigen, da die Bildungsgeschwindigkeit des $ClO_2$ direkt proportional der HCl-Konzentration ist.

Reaktionszeiten von einigen Stunden sind erforderlich, wenn die gesamte Chlorwasserstoffsäure reagieren soll.

2) Ausblasen von $ClO_2$.

   Da Chlordioxid eine gasförmige chemische Verbindung ist, die sich in zu hoher Konzentration explosionsartig zersetzt, muß der Partialdruck zur Vermeidung von Explosionen herabgesetzt werden. Das geschieht entweder durch Einstellen eines verminderten Druckes oder Verdünnung mit einem anderen Gas oder einer Kombination von beiden.
Das Ausblasen des $ClO_2$-Gases geschieht in Sekunden oder wenigen Minuten.

Sowohl die geforderte hohe HCl-Konzentration als auch das Ausblasen des $ClO_2/Cl_2$-Gases verlangen einen Gegenstromprozeß. Bekannte Arbeitsweisen werden beispielsweise in einem Reaktor gemäß Fig. 1 durchgeführt, in welchem Reaktor die Reaktionsräume hydraulisch voneinander getrennt sind. Am Kopf des Reaktors werden über Leitung 3 Chlorwasserstoffsäure und über Leitung 7 eine wäßrige Natriumchloratlösung eingeführt. Über den Eintritt 1 wird ein Verdünnungsgas, z. B. Luft, eingesaugt, und über den Austritt 4 verlassen die Reaktionsprodukte Chlordioxid und Chlor sowie die Restgase den Reaktor. Mit 2 sind die jeweiligen Flüssigkeitsüberläufe und mit 6 die Gasglocken bezeichnet. Die verbrauchte Reaktionslösung wird über Leitung 8 abgezogen. Die Reaktionsräume 5 sind flüssigkeitsseitig und gasseitig durch Tauchungen getrennt, wobei für die Gastauchung Glocken verwendet werden. Demzufolge herrscht in jedem Reaktionsraum 5 die Ablaufkonzentration, d.h. die Anfangskonzentration an HCl und $NaClO_3$ wird sofort herabgesetzt,ohne für eine optimale Reaktion genutzt worden zu sein.
Hat man bei einem 6-stufigen Reaktor eine Einlaufkonzentration von 150 g/l HCl und eine Auslaufkonzentration von 10 g/l, so stellt sich durch das sofortige Verdünnen die mittlere Konzentration auf 36 g/l, während die mittlere HCl-Konzentration unter gleichen Bedingungen bei idealem Gegenstrom 80 g/l wäre. Da die Bildungsgeschwindigkeit des $ClO_2$ direkt proportional zur HCl-Konzentration ist, brauchte der Reaktor an sich nur halb so groß dimensioniert zu werden.

Eine beliebige Vergrößerung der Anzahl der Reaktionsräume ist jedoch wegen baulicher Umstände und der Höhenzunahme

sowie wegen des geforderten Reaktionsvolumens in der Flüssigkeit nicht möglich.

Der Erfindung liegt die Aufgabe zugrunde, die genannten Nachteile der vorbekannten Vorrichtung und weitere Nachteile zu beseitigen und einen Reaktor für verbesserte Reaktionsbedingungen für Gas/Flüssigkeits-Reaktionen zur Verfügung zu stellen.

Die Erfindung löst die Aufgabe mit einem Reaktor für die Herstellung von Chlordioxid aus Natriumchlorat und Chlorwasserstoffsäure unter Verwendung eines Spülgas-Gegenstromes, mit mehreren übereinander angeordneten und mit Öffnungen versehenen, die Rückvermischung von Gas und Flüssigkeit hindernden Einbauten.

Bei einem Reaktor der vorstehend beschriebenen Art besteht die Erfindung darin, daß die Einbauten als in horizontalen Ebenen angeordnete, profilierte Bleche gestaltet sind, wobei deren Erhöhungen und Vertiefungen Durchtrittsöffnungen aufweisen. In dem erfindungsgemäßen Reaktor werden mindestens vier Trennböden und vorteilhaft eine Vielzahl z. B. zwölf, darin angeordnet, zweckmäßig über die gesamte Höhe des Reaktors gleichmäßig verteilt. Die Trennböden können in gleichen oder unterschiedlichen Abständen voneinander angeordnet werden. Bei unterschiedlichen Abständen ergeben sich unterschiedliche Verweilzeiten der Reaktionsflüssigkeit. Die gasförmige Komponente des flüssigen Reaktionsmediums tritt durch die Öffnungen der Erhebungen, während das flüssige Medium den Weg durch die Durchtrittsöffnungen in den Vertiefungen nimmt und schließlich im Bodenbereich des Reaktors abgezogen wird, während die gasförmige Komponente im Kopfbereich des Reaktors abgezogen wird.

Im Sinne der Erfindung werden unter profilierten Blechen, die in horizontalen Ebenen als Trennboden im Reaktor angeordnet sind, Bleche der unterschiedlichsten Profilierung verstanden. Beispielsweise eignen sich wellen- oder zickzackförmig profilierte Bleche. Die in den jeweiligen Erhebungen und Vertiefungen angebrachten Durchtrittsöffnungen können kreis- oder schlitzförmig oder in beliebiger Weise geformt sein. Bei zickzack- oder wellenförmig profilierten Trennboden-Blechen hat es sich als günstig herausgestellt, die Trennböden alternierend um 90 ° verdreht (auf die Scheitellinien bezogen) anzuordnen. Weitere Ausführungsformen der Trennböden des erfindungsgemäßen Reaktors sind beispielsweise Bleche mit pyramidenförmigen, kegelförmigen, kalottenförmigen oder in ähnlicher Weise geformten Erhebungen. Höchste und tiefste Stellen der Profile sind mit beliebig gestalteten Öffnungen versehen.

Durch die Erfindung wird bewirkt, daß der Reaktor in eine beliebige Anzahl von Reaktionsräumen durch Einbau einer entsprechenden beliebigen Anzahl von Zwischenböden aufgeteilt bzw. getrennt wird, welche die Vermischung der Reaktionslösung hemmen. Hierdurch wird eine höhere mittlere Salzsäurekonzentration erzielt und eine höhere Effektivität der Reaktion zwischen Natriumchlorat und Salzsäure herbeigeführt. Desweiteren wird es möglich, den Chlordioxid-Reaktor mit höherer Sicherheit zu betreiben, weil die einzelnen Chlordioxid enthaltenden Gasräume, die z. B. bei vorbekannten Reaktoren mit Glockenböden auftreten, wegfallen.

Die Erfindung wird anhand der Fig. 1 und 2 der Zeichnungen näher erläutert. Es zeigen Fig. 1 in schematischer Darstellung einen Längsschnitt durch einen herkömmlichen Reaktor und Fig. 2 in schematischer Darstellung einen Längsschnitt durch einen Reaktor mit einer Vielzahl von Trennböden gemäß Erfindung.

Im Reaktorbehälter 1 der Fig. 2 sind zickzackförmig profilierte Trennböden 2 eingebaut, welche in ihren Erhebungen Öffnungen 4 für den Gasdurchtritt und Öffnungen 3 für den Flüssigkeitsdurchtritt besitzen. Über Leitung 5 wird Salzsäure und über Leitung 6 eine wäßrige Lösung von Natriumchlorat zugeführt. Aus dem praktisch den gesamten Reaktor 1 füllenden

flüssigen Reaktionsmedium werden die gasförmigen Reaktionsprodukte über Leitung 7 abgeführt, unterstützt durch das über Gasverteilungsrohr 8 im Gegenstrom eingeführte Verdünnungsgas. Die verbrauchte Reaktionslösung wird mittels Leitung 10 aus dem System abgeführt. Mit 9 ist der entstandene einzige Gasraum bzw. das einzige größere Gasvolumen innerhalb des Reaktors bezeichnet.

Die Erfindung wird anhand des nachstehenden Ausführungsbeispiels näher und beispielhaft erläutert.

Es wurde ein Reaktor mit Trennböden aus zickzackförmig gleichmäßig profilierten Titanblechen verwendet. Die Profilhöhe der Profilierung betrug 50 mm. Für den Flüssigkeitsdurchlaß waren die Vertiefungen mit Löchern versehen, die 1,5 % der Bodenfläche einnahmen. Der Gasdurchtritt wurde durch Schlitze in den Erhebungen ermöglicht, wobei die Schlitze 25 % der Trennbodenfläche einnahmen. Die Trennböden waren jeweils um 90° gegeneinander verdreht im Reaktor eingebaut.

Ein Gemisch aus Natrium-Chloratlösung und Salzsäure nachfolgender Zusammensetzung wurde unter üblichen Bedingungen von Druck- und Temperatur in den Reaktor eingeführt, der unterschiedliche Bodenzahlen und unterschiedliche Verweilzeiten der Reaktionsflüssigkeit zwischen den Zwischenböden erlaubte:

| | |
|---|---|
| $NaClO_3$: | 280 g/l |
| NaCl: | 60 " |
| HCl: | 140 " |
| $H_2O$: | 800 " |

Die Ablaufkonzentration der Lösung wurde auf folgende Werte eingestellt:

| | |
|---|---|
| $NaClO_3$: | 140 g/l |
| NaCl: | 150 " |
| HCl: | 20 " |
| $H_2O$: | 880 ". |

Um diese Ablaufkonzentration zu erhalten, wurden die Verweilzeiten wie folgt modifiziert:

1) Vierstufiger Reaktor mit jeweils gleichen Verweilzeiten zwischen den Böden. Gesamtverweilzeit: 4 $^h$,
Wirkungsgrad ca. 89,5 %;

2) achtstufiger Reaktor mit jeweils gleichen Verweilzeiten zwischen den Böden, Gesamtverweilzeit: 3,5 $^h$,
Wirkungsgrad ca. 90,5 %;

3) achtstufiger Reaktor mit Verweilzeit 1 auf den Böden 1 bis 6 von oben, und Verweilzeit 3 auf den Böden 7 und 8,
Gesamtverweilzeit: 2,8 $^h$,
Wirkungsgrad ca. 92,0 %

Mit den vorstehenden Modifizierungen wurde gleichzeitig der Wirkungsgrad des Reaktors verbessert, wobei unter Wirkungsgrad der Prozentsatz des Natriumchlorats verstanden wird, der nach der Gleichung

$$NaClO_3 + 2\ HCl \longrightarrow ClO_2 + 1/2\ Cl_2 + NaCl + H_2O$$

und nicht nach der Gleichung

$$NaClO_3 + 6\ HCl \longrightarrow 3\ Cl_2 + NaCl + 3\ H_2O$$

umgesetzt worden ist.

Patentansprüche

1) Reaktor für die Herstellung von Chlordioxid aus Natriumchlorat und Chlorwasserstoffsäure unter Verwendung eines Spülgas-Gegenstromes, mit mehreren übereinander angeordneten und mit Öffnungen versehenen, die Rückvermischung von Gas und Flüssigkeit hindernden Einbauten, dadurch gekennzeichnet, daß die Einbauten als in horizontalen Ebenen angeordnete, profilierte Trennboden-Bleche gestaltet sind, wobei deren Erhebungen und Vertiefungen Durchtrittsöffnungen aufweisen.

2) Reaktor nach Anspruch 1, dadurch gekennzeichnet, daß die Einbauten zickzack- oder wellenförmig profilierte Bleche sind.

3) Reaktor nach den Ansprüchen 1 bis 2, dadurch gekennzeichnet, daß die Trennböden, auf die Scheitellinien bezogen, alternierend um 90 °C gegeneinander verdreht angeordnet sind.

4) Reaktor nach den Ansprüchen 1 bis 3, dadurch gekennzeichnet, daß die Trennböden in voneinander unterschiedlichen Abständen angeordnet sind.

Fig.1

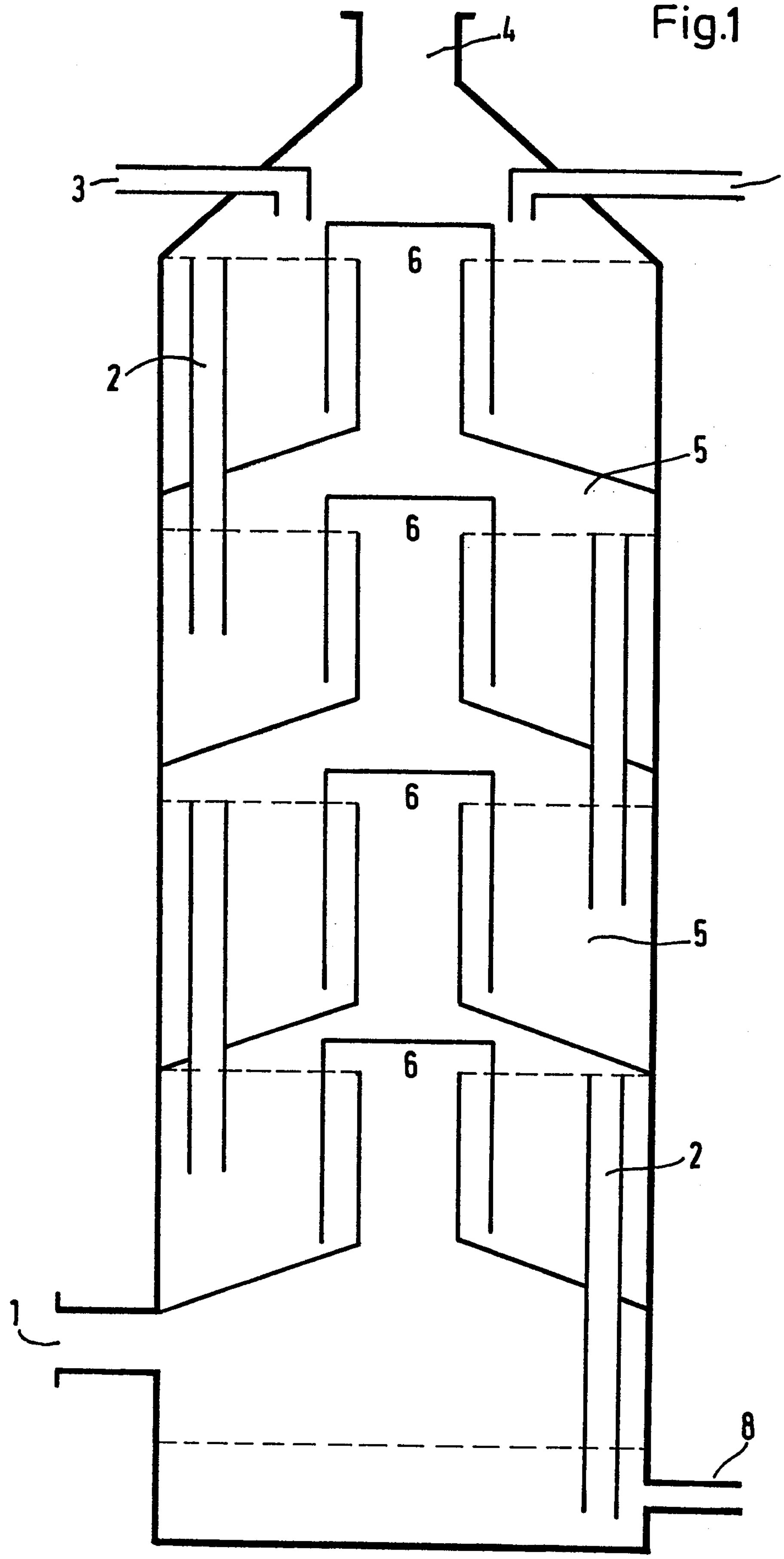

Fig. 2

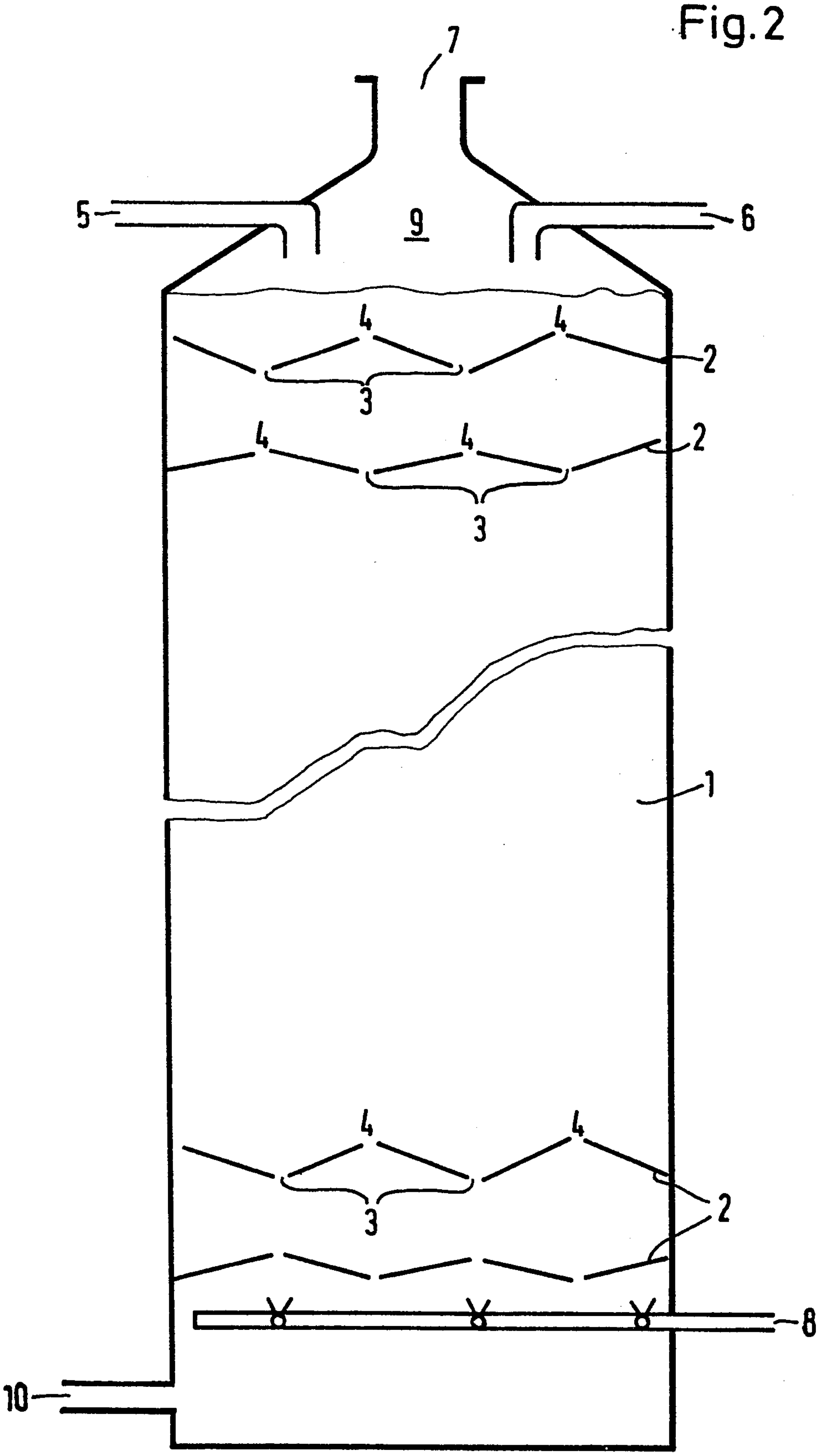

0094718

Europäisches Patentamt

# EUROPÄISCHER RECHERCHENBERICHT

Nummer der Anmeldung

EP 83 20 0664

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| | | | C 01 B 11/02<br>B 01 J 14/00<br>B 01 J 19/24 |
| X | US-A-4 049 785 (W.A. FULLER)<br>* Zusammenfassung; Abbildung 1; Spalte 4, Zeilen 5-66 *<br>--- | 1,2 | |
| X | US-A-4 049 784 (W.A. FULLER)<br>* Zusammenfassung; Abbildung 1; Spalte 4, Zeile 13 - Spalte 5, Zeile 6 *<br>--- | 1,2 | |
| X | US-A-4 045 542 (W.A. FULLER)<br>* Zusammenfassung; Abbildung 1; Seite 4, Zeilen 8-63 *<br>--- | 1,2 | |
| A | GB-A-2 000 048 (NIPPON KOKAN)<br>* Zusammenfassung; Abbildungen 3,4; Seite 1, Zeilen 5-7; Seite 4, Zeile 28 - Seite 5, Zeile 13 *<br>--- | 3 | RECHERCHIERTE SACHGEBIETE (Int. Cl. 3) |
| A | DE-A-2 939 047 (VEB CHEMIEANLAGEN KOMBINAT LEIPZIG/GRIMMA)<br>* Ansprüche 1-3; Seite 2, 1. Absatz; Seite 4, letzter Absatz - Seite 5, 2. Absatz; Abbildungen 1,2 *<br>----- | 3,4 | B 01 J<br>C 01 B |

Der vorliegende Recherchenbericht wurde für alle Patentansprüche erstellt.

| Recherchenort | Abschlußdatum der Recherche | Prüfer |
|---|---|---|
| DEN HAAG | 23-08-1983 | SIEM T.D. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument